(19) Europäisches Patentamt
European Patent Office
Office européen des brevets

(11) **EP 4 412 290 A1**

(12) **EUROPEAN PATENT APPLICATION**
published in accordance with Art. 153(4) EPC

(43) Date of publication:
**07.08.2024 Bulletin 2024/32**

(21) Application number: **22874600.4**

(22) Date of filing: **08.09.2022**

(51) International Patent Classification (IPC):
***H04W 24/08*** (2009.01)

(52) Cooperative Patent Classification (CPC):
**G01S 5/10; H04W 4/02; H04W 24/08; H04W 64/00**

(86) International application number:
**PCT/CN2022/117755**

(87) International publication number:
**WO 2023/051213 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111165523
14.02.2022 CN 202210135645**

(71) Applicant: **Datang Mobile Communications
Equipment Co., Ltd.
Beijing 100085 (CN)**

(72) Inventors:
• **FANG, Rongyi
Beijing 100085 (CN)**
• **REN, Xiaotao
Beijing 100085 (CN)**
• **REN, Bin
Beijing 100085 (CN)**
• **DA, Ren
Beijing 100085 (CN)**

(74) Representative: **Studio Torta S.p.A.
Via Viotti, 9
10121 Torino (IT)**

(54) **INFORMATION TRANSMISSION METHOD, MEASURING TERMINAL, LOCATION RESOLVING TERMINAL, APPARATUS AND STORAGE MEDIUM**

(57)    The present disclosure provides an information transmission method, a measuring terminal, a location resolving terminal, an apparatus, and a storage medium. The method comprises: determining power parameters of a plurality of first paths, the plurality of first paths being paths obtained by the measuring terminal detecting a reference signal other than a first path; selecting at least one second path from the plurality of first paths on the basis of a multipath parameter threshold and the power parameters of the plurality of first paths; and sending measurement information of the at least one second path. According to the method, the measuring terminal, the location resolving terminal, the apparatus, and the storage medium provided by the present disclosure, on the basis of the multipath parameter threshold and the power parameters of the plurality of first paths, the second path is selected from the plurality of first paths, such that more effective information for positioning is provided for the location resolving terminal, the influence of noise and interference during positioning can be reduced, and the positioning performance is improved.

Determining power parameters for multiple first paths, where the multiple first paths are paths other than a first detected path obtained by detecting a reference signal by a measuring end — 110

Selecting at least one second path from the multiple first paths based on a multipath parameter threshold and the power parameters for the multiple first paths — 120

Transmitting measurement information of the at least one second path — 130

FIG. 1

## Description

## CROSS-REFERENCE TO RELATED APPLICATIONS

The present application claims priority to Chinese Patent Application No. 202111165523.8, filed on September 30, 2021, entitled "Information Transmission Method, Measuring Terminal, Location Resolving Terminal, Apparatus and Storage Medium", and Chinese Patent Application No. 202210135645.0, filed on February 14, 2022, entitled "Information Transmission Method, Measuring Terminal, Location Resolving Terminal, Apparatus and Storage Medium", which are hereby incorporated by reference in their entirety.

## FIELD

The present application relates to the field of communication, and in particular to information transmission methods and apparatuses, a measuring end, a position calculating end, and a storage medium.

## BACKGROUND

In radio communication positioning, due to the reflection and refraction of radio signals, in addition to the first detected path, there also exist multiple delayed arrival paths, which is referred to the multipath phenomenon.

Under the multipath phenomenon, when the measured power of the first detected path is very low relative to that of the remaining paths, the first detected path at this time may actually be noise or interference. For the first detected path, regardless of whether the delay or angle measurement algorithm is applied, it is difficult to achieve a good positioning result. Therefore, in addition to the information of the first detected path, the measuring end generally needs to report the information of multiple paths other than the first detected path to provide more choices for the position calculating end.

The selection of information of which path to report may directly affect subsequent positioning accuracy.

## SUMMARY

Embodiments of the present application provide information transmission methods and apparatuses, a measuring end, a position calculating end, and a storage medium to solve a problem related to an accuracy of terminal positioning.

An embodiment of the present application provides an information transmission method, applied to a measuring end, including:

determining power parameters for multiple first paths, where the multiple first paths are paths other than a first detected path obtained by detecting a reference signal by the measuring end;
selecting at least one second path from the multiple first paths based on a multipath parameter threshold and the power parameters for the multiple first paths; and
transmitting measurement information of the at least one second path.

In an embodiment, selecting the at least one second path from the multiple first paths based on the multipath parameter threshold and the power parameters for the multiple first paths includes:

selecting the at least one second path from the multiple first paths based on the multipath parameter threshold, the power parameters for the multiple first paths, a multipath time interval and delays of the multiple first paths,
where the multipath time interval is determined based on a length of the multipath time interval and a delay of the first detected path.

In an embodiment, selecting the at least one second path from the multiple first paths based on the multipath parameter threshold, the power parameters for the multiple first paths, the multipath time interval and the delays of the multiple first paths includes:

selecting at least one first candidate path from the multiple first paths, where the first candidate path is the first path of which the power parameter is greater than or equal to the multipath parameter threshold and the delay is within the multipath time interval; and
selecting the at least one second path from the at least one first candidate path based on a delay and/or a power parameter of the at least one first candidate path.

In an embodiment, selecting the at least one second path from the at least one first candidate path based on the delay and/or the power parameter of the at least one first candidate path includes:

determining top a first number of the first candidate paths in ascending order of the delays as the second paths;
or,
determining top a second number of the first candidate paths in descending order of the power parameters as the second paths.

In an embodiment, in case that the measuring end is a terminal, the method further includes:

receiving at least one of a parameter type of the power parameter, the multipath parameter threshold or the length of the multipath time interval transmitted from a location management function (LMF) and/or a base station;
or,
determining at least one of a parameter type of the power parameter, the multipath parameter threshold or the length of the multipath time interval based on historical information, or based on historical information and channel change information.

In an embodiment, the method further includes:

generating the channel change information; and transmitting the channel change information to the LMF and/or the base station, where the channel change information is used to trigger the LMF and/or the base station to reconfigure at least one of the parameter type of the power parameter, the multipath parameter threshold or the length of the multipath time interval.

In an embodiment, in case that the measuring end is a base station, the method further includes:

receiving at least one of a parameter type of the power parameter, the multipath parameter threshold or the length of the multipath time interval transmitted from a location management function (LMF) and/or a terminal;
or,
determining at least one of a parameter type of the power parameter, the multipath parameter threshold or the length of the multipath time interval based on historical information, or based on historical information and channel change information.

In an embodiment, the method further includes:

receiving the channel change information generated by the terminal, or generating the channel change information; and transmitting the channel change information to the LMF, where the channel change information is used to trigger the LMF to reconfigure at least one of the parameter type of the power parameter, the multipath parameter threshold or the length of the multipath time interval.

In an embodiment, the parameter type of the power parameter is absolute power or relative power.
In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.
An embodiment of the present application provides an information transmission method, applied to a position calculating end, including:

receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and
positioning a terminal based on the measurement information of the at least one second path.

In an embodiment, the method further includes:

determining at least one of a parameter type of the power parameter, the multipath parameter threshold or a length of a multipath time interval based on historical information; and
transmitting at least one of the parameter type of the power parameter, the multipath parameter threshold or the length of the multipath time interval to the measuring end.

In an embodiment, determining at least one of the parameter type of the power parameter, the multipath parameter threshold or the length of the multipath time interval includes:
receiving channel change information transmitted from the terminal and/or a base station, and reconfiguring at least one of the parameter type of the power parameter, the multipath parameter threshold or the length of the multipath time interval based on the historical information and the channel change information.
In an embodiment, the parameter type of the power parameter is absolute power or relative power.
In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.
An embodiment of the present application provides a measuring end, including a memory, a transceiver and a processor,
where the memory is used to store a computer program, the transceiver is used to transmit and receive data under control of the processor, and the processor is used to read the computer program in the memory and perform the following operations of:

determining power parameters for multiple first paths, where the multiple first paths are paths other than a first detected path obtained by detecting a reference signal by the measuring end;
selecting at least one second path from the multiple first paths based on a multipath parameter threshold and the power parameters for the multiple first paths; and
transmitting measurement information of the at least one second path.

An embodiment of the present application provides a position calculating end, including a memory, a transceiver and a processor,
where the memory is used to store a computer program, the transceiver is used to transmit and receive data under control of the processor, and the processor is used to read the computer program in the memory and perform the following operations of:

receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and
positioning a terminal based on the measurement information of the at least one second path.

An embodiment of the present application provides an information transmission apparatus, including:

a power parameter determining unit, used for determining power parameters for multiple first paths, where the multiple first paths are paths other than a first detected path obtained by detecting a reference signal by a measuring end;
a path selecting unit, used for selecting at least one second path from the multiple first paths based on a multipath parameter threshold and the power parameters for the multiple first paths; and
an information transmitting unit, used for transmitting measurement information of the at least one second path.

In an embodiment, the path selecting unit is further used for:

selecting the at least one second path from the multiple first paths based on the multipath parameter threshold, the power parameters for the multiple first paths, a multipath time interval and delays of the multiple first paths,

where the multipath time interval is determined based on a length of the multipath time interval and a delay of the first detected path.

In an embodiment, the path selecting unit includes:

a candidate path selecting subunit, used for selecting at least one first candidate path from the multiple first paths, where the first candidate path is the first path of which the power parameter is greater than or equal to the multipath parameter threshold and the delay is within the multipath time interval; and
a second path selecting subunit, used for selecting the at least one second path from the at least one first candidate path based on a delay and/or a power parameter of the at least one first candidate path.

In an embodiment, the second path selecting subunit is further used for:

determining top a first number of the first candidate paths in ascending order of the delays as the second paths;
or,
determining top a second number of the first candidate paths in descending order of the power parameters as the second paths.

In an embodiment, in case that the measuring end is a terminal, the information transmission apparatus further includes a first configuring unit, used for:

receiving at least one of a parameter type of the power parameter, the multipath parameter threshold or the length of the multipath time interval transmitted from a location management function (LMF) and/or a base station;
or,
determining at least one of a parameter type of the power parameter, the multipath parameter threshold or the length of the multipath time interval based on historical information, or based on historical information and channel change information.

In an embodiment, the information transmission apparatus further includes a first channel change transmitting unit, used for:

generating the channel change information; and
transmitting the channel change information to the LMF and/or the base station, where the channel change information is used to trigger the LMF and/or the base station to reconfigure at least one of the parameter type of the power parameter, the multipath parameter threshold or the length of the multipath time interval.

In an embodiment, in case that the measuring end is a base station, the information transmission apparatus further includes a second configuring unit, used for:

receiving at least one of a parameter type of the power parameter, the multipath parameter threshold or the length of the multipath time interval transmitted from a location management function (LMF) and/or a terminal;
or,
determining at least one of a parameter type of the power parameter, the multipath parameter threshold or the length of the multipath time interval based on historical information, or based on historical information and channel change information.

In an embodiment, the information transmission apparatus further includes a second channel change transmitting unit, used for:

receiving the channel change information generated by the terminal, or generating the channel change information; and
transmitting the channel change information to the LMF, where the channel change information is used to trigger the LMF to reconfigure at least one of the parameter type of the power parameter, the multipath parameter threshold or the length of the multipath time interval.

In an embodiment, the parameter type of the power parameter is absolute power or relative power.

In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.

An embodiment of the present application provides an information transmission apparatus, including:

an information receiving unit, used for receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and
a positioning unit, used for positioning a terminal based on the measurement information of the at least one second path.

In an embodiment, the information transmission apparatus further includes:

a configuration determining unit, used for determining at least one of a parameter type of the power parameter, the multipath parameter threshold or a length of a multipath time interval based on historical information; and
a third configuring unit, used for transmitting at least one of the parameter type of the power parameter, the multipath parameter threshold or the length of the multipath time interval to the measuring end.

In an embodiment, the configuration determining unit is further used for:
receiving channel change information transmitted from the terminal and/or a base station, and reconfiguring at least one of the parameter type of the power parameter, the multipath parameter threshold or the length of the multipath time interval based on the historical information and the channel change information.

In an embodiment, the parameter type of the power parameter is absolute power or relative power.

In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.

An embodiment of the present application provides a processor readable storage medium storing a computer program that, when executed by a processor, causes the processor to perform the information transmission method applied to the measuring end or the information transmission method applied to the position calculating end.

In the information transmission methods and apparatuses, the measuring end, the position calculating end, and the storage medium provided by the present application, the second path is selected from the multiple first paths based on the multipath parameter threshold and the power parameters for the multiple first paths, which provides the position calculating end with more effective information for positioning, reduces the impact of noise and interference during positioning, and improves positioning performance.

**BRIEF DESCRIPTION OF DRAWINGS**

In order to more clearly illustrate the solutions according to the embodiments of the present application, the accompanying drawings used in the description for the embodiments are briefly introduced below. It should be noted that the drawings in the following description are only some embodiments of the present application. For those of ordinary skill in the art, other drawings may be obtained according to these drawings without creative effort.

FIG. 1 is a first schematic flowchart of an information transmission method according to an embodiment of the present application;

FIG. 2 is a schematic diagram of path selection according to an embodiment of the present application;

FIG. 3 is a schematic diagram of a mode for obtaining angle and phase according to an embodiment of the present application;

FIG. 4 is a second schematic flowchart of an information transmission method according to an embodiment of the present application;

FIG. 5 is a schematic structural diagram of a measuring end according to an embodiment of the present application;

FIG. 6 is a schematic structural diagram of a position calculating end according to an embodiment of the present application;

FIG. 7 is a first schematic structural diagram of an information transmission apparatus according to an embodiment of the present application; and

FIG. 8 is a second schematic structural diagram of an information transmission apparatus according to an embodiment of the present application.

**DETAILED DESCRIPTION OF THE EMBODIMENTS**

The term "and/or" in the embodiments of the present application describes three situations of the associated objects. For example, A and/or B may represent three situations: only A, A and B together, and only B. The character "/" generally represents that the two objects on two sides have a relationship of "or".

The term "multiple" in the embodiments of the present application refers to two or more, and other quantifiers are similar to it.

The solutions according to the present application are clearly described below in combination with the accompanying drawings in the embodiments of the present application. It should be noted that the described embodiments are some embodiments of the present application, rather than all the embodiments. Based on the embodiments of the present application, all other embodiments obtained by those of ordinary skill in the art without creative effort are within the scope of protection of the present application.

In radio communication positioning, due to the reflection and refraction of radio signals, in addition to the first detected path, there also exist multiple delayed arrival paths, which is referred to as the multipath phenomenon. In a deteriorated scenario, due to obstacles blocking the radio channel between the signal transmitting and receiving ends, there is a situation where there is no direct path, which is referred to as the non-line-of-sight (NLOS) phenomenon. Both the multipath and the NLOS phenomena affect positioning accuracy.

In a traditional positioning technique, it is necessary to obtain information of the direct path. For NLOS phenomenon, some identification and elimination modes may be used to reduce its impact. For multipath phenomenon, when the measured power of the first detected path is very low relative to that of the remaining paths, the first detected path at this time may actually be noise or interference. For the first detected path, regardless of whether the delay or angle measurement algorithm is applied, it is difficult to achieve a good positioning result. To solve this problem, the related art proposes that in addition to the information of the first detected path, it is also necessary to report the information of multiple paths other than the first detected path, which has two advantages: first, the position calculating end is provided with more choices, the real line of sight (LOS) path may be included in the multiple reported paths, and the position calculating end may extract the LOS path by optimization algorithms (such as the residual algorithm); second, the reported information of multiple paths may represent the radio channel characteristics related to the position of a terminal to be positioned, for example, the information of multiple paths may include geometric information corresponding to the user location. An appropriate model may be trained through algorithms such as artificial intelligence (AI), and a position result free from multipath interference may be obtained by the model. However, reporting information of multiple paths has a problem, that is, how to select a path other than the first detected path for reporting, where the path selection principle has a significant impact on subsequent positioning.

The present application provides an information transmission method, applied to a measuring end in a positioning scenario. In an uplink positioning scenario, the measuring end may be a base station; in a downlink positioning scenario, the measuring end may be a terminal; and in an uplink and downlink joint positioning scenario, there may be two measuring ends, one of which is the base station and another is the terminal. The method provided by the following embodiments may be applied to the uplink positioning scenario, the downlink positioning scenario, and the uplink and downlink joint positioning scenario.

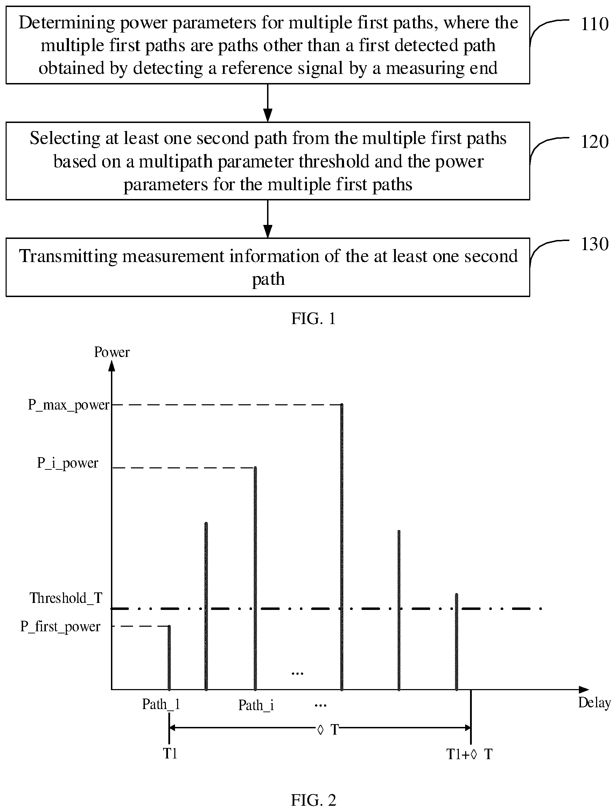

FIG. 1 is a first schematic flowchart of an information transmission method according to an embodiment of the present application. As shown in FIG. 1, the method includes the following steps.

Step 110: determining power parameters for multiple first paths, where the multiple first paths are paths other than a first detected path obtained by detecting a reference signal by a measuring end.

When positioning, the measuring end may obtain multiple paths by detecting the reference signal, where the multiple paths include the first detected path and the first paths, the first detected path is the first of the multiple paths obtained by detecting the reference signal by the measuring end, and is the earliest path detected by the measuring end among the multiple paths, and except for the first detected path, other paths in the multiple paths may be denoted as the first paths.

The power parameter for each first path may be detected and obtained, where the power parameter is used to represent power of the first path. In an embodiment, the power parameter may represent a relative power of the first path, and the power parameter in this embodiment may be a ratio of the power of the first path to a reference power, for example, a ratio of the power of the first path to power of the first detected path, or a ratio of the power of the first path to a sum of power for all paths. In an embodiment, the power parameter may represent an absolute power of the first path, and the power parameter in this embodiment may be the absolute power of the first path.

It should be noted that, in the uplink positioning scenario, the measuring end is a base station, the reference signal is a sounding reference signal (SRS), a terminal transmits the SRS to the base station, and the base station may obtain multiple paths by detecting the SRS. In the downlink positioning scenario, the measuring end is a terminal, the reference signal is a positioning reference signal (PRS), a base station transmits the PRS to the terminal, and the terminal may obtain association information of multiple paths by detecting the PRS. In the uplink and downlink joint positioning scenario, both a terminal and a base station are measuring ends, the terminal transmits an SRS to the base station, and the base station may obtain association information of multiple uplink paths by detecting the SRS; and the base station transmits a PRS to the terminal, and the terminal may obtain association information of multiple downlink paths by detecting the PRS.

Step 120: selecting at least one second path from the multiple first paths based on a multipath parameter threshold and the power parameters for the multiple first paths.

In an embodiment, the multipath parameter threshold is a parameter threshold that belongs to a same parameter type of the power parameter. For example, when the power parameter represents the relative power, the multipath parameter threshold may be a value within a range from 0 to 1. For another example, when the power parameter represents the absolute power, the multipath parameter threshold may be a value greater than 0. The multipath parameter threshold is set for selecting the second path from the first paths. In an embodiment, the path whose power parameter is greater than or equal to the multipath parameter threshold is selected from the first paths as the second path. The second path obtained by selecting based on the multipath parameter threshold has a higher power, or its power is higher compared to power of other paths. The second path has a higher probability of being a direct path, and provides the position calculating end with a greater reference for positioning.

A simple and easy mode for selecting a path other than the first detected path to perform information reporting is provided by applying the multipath parameter threshold, the second path selected and obtained in this mode is the path that is needed for performing information reporting in addition to the first detected path. The second path may be one or multiple.

Further, the multipath parameter threshold may be configured by the measuring end, may be configured by a transmitting end of the reference signal to the measuring end, or may be configured by the position calculating end to the measuring end. In the positioning procedure, the multipath parameter threshold may be fixed, or re-configuration of the multipath parameter threshold may be triggered when factors such as the environment where the terminal is located and/or the status of the terminal change, which is not limited in the embodiments of the present application.

Step 130: transmitting measurement information of the at least one second path.

After obtaining the second path, the measuring end may transmit the measurement information of the second path to the position calculating end, and then the position calculating end may perform terminal positioning based on the measurement information of the first detected path and the measurement information of each second path. Since the measurement information transmitted from the measuring end to the position calculating end is the measurement information of the second path selected based on the multipath parameter threshold, based on which the position calculating end may obtain more effective information when performing terminal positioning, thereby the reliability and accuracy of terminal positioning are ensured.

In the method provided by embodiments of the present application, at least one second path is selected from the multiple first paths based on the multipath parameter threshold and the power parameters for the multiple first paths, which provides the position calculating end with more effective information for positioning, reduces the impact of noise and interference during positioning, and improves positioning performance.

Based on the above embodiments, the step 120 may further include:

selecting the at least one second path from the multiple first paths based on the multipath parameter threshold, the power parameters for the multiple first paths, a multipath time interval and delays of the multiple first paths, where the multipath time interval is determined based on a length of the multipath time interval and a delay of the first detected path.

In an embodiment, when selecting the second path, not only the perspective of power, combining the multipath parameter threshold and the power parameter of each first path is needed for selecting from the first paths, but also the perspective of delay, combining the multipath time interval and the delays of the first paths is needed for selecting from the first paths.

The multipath time interval represents a maximum time range within which effective multi-path may occur after the first detected path, where the effective multi-path is the expected path included in the second path by selecting from the first paths, and is the path that may provide effective information for terminal positioning. When selecting from the first paths based on the multipath time interval and the delay of each first path, the first path whose delay is within the multipath time interval may be selected as the second path, and the delay of the selected second path is within the multipath time interval, that is, the selected second path may be the effective multi-path.

The second path obtained by selecting from the first paths by combining the power perspective and the delay perspective is the first path whose power parameter is greater than or equal to the multipath parameter threshold and delay is within the multipath time interval.

It should be noted that, the multipath time interval is determined based on the length of the multipath time interval and the delay of the first detected path, assuming the delay of the first detected path is $T1$, and the length of the multipath time interval is $\Delta T$, the multipath time interval may be denoted as $[T1,T1+\Delta T]$, where the delay $T1$ of the first detected path is measured and obtained by the measuring end, and the length of the multipath time interval may be configured by the measuring end, or may be configured by the transmitting end of the reference signal to the measuring end, or may be configured by the position calculating end to the measuring end. In the positioning procedure, the length of the multipath time interval may be fixed, or re-configuration of the length of the multipath time interval may be triggered when factors such as the environment where the terminal is located and/or the status of the terminal change, which is not limited in the embodiments of the present application.

In the method provided by embodiments of the present application, the first paths are selected from the two perspectives of power and delay based on the multipath parameter threshold and the multipath time interval, which provides the position calculating end with more effective information for positioning, reduces the impact of noise and interference during positioning, and improves positioning performance.

Based on any of the above embodiments, the step 120 may further include:

> selecting at least one first candidate path from the multiple first paths, where the first candidate path is the first path of which the power parameter is greater than or equal to the multipath parameter threshold and the delay is within the multipath time interval; and selecting the at least one second path from the at least one first candidate path based on a delay and/or a power parameter of the at least one first candidate path.

Among all the first paths, the number of the paths that meet both the multipath parameter threshold in the power perspective and the multipath time interval in the delay perspective may exceed a preset number of second paths transmitted from the measuring end to the position calculating end. In this case, the first path that meets both the multipath parameter threshold in the power perspective and the multipath time interval in the delay perspective needs further selection, and the first path that meets both the multipath parameter threshold in the power perspective and the multipath time interval in the delay perspective is denoted as the first candidate path.

After all the first candidate paths are obtained, the second path may be selected from the first candidate paths based on a delay and/or a power parameter of each first candidate path. For example, when selecting from all the first candidate paths, a preset number of paths with smallest delays may be selected as the second paths, or a preset number of paths with highest power parameters may be selected as the second paths; or, when selecting the preset number of paths with the highest power parameters, if there are two first candidate paths with the same power parameter, the one with smaller delay may be selected as the second path; or if there are two first candidate paths with the same delay, the one with higher power parameter may be selected as the second path; or if there are two first candidate paths with the same delay and power parameter, one may be randomly selected as the second path.

In the method provided by embodiments of the present application, a secondary selection is performed on the first paths by using the delay and/or power of the path, which effectively limits the amount of information transmission and avoids waste of transmission resources while providing effective information to the position calculating end.

Based on any of the above embodiments, in the step 120, selecting the at least one second path from the at least one first candidate path based on the delay and/or the power parameter of the at least one first candidate path includes:

> determining top a first number of the first candidate paths in ascending order of the delays as the second paths;
> or,
> determining top a second number of the first candidate paths in descending order of the power parameters as the second paths.

When performing the secondary selection on the first paths, all the first candidate paths may be sorted in an order of delay from small to large, and top the first number of the first candidate paths are selected from the sorted sequence as the second paths. The selected second paths are paths with smaller delays among the first candidate paths, that is, the first number of the first candidate paths with the smallest delays are selected.

In addition, all the first candidate paths may also be sorted in an order of power parameter from large to small, and top the second number of the first candidate paths are selected from the sorted sequence as the second paths. The selected second paths are paths with higher power parameters in the first candidate paths, that is, the second number of the first candidate paths with the highest power parameters are selected.

It should be noted that, the first number and the second number are both a preset number of paths, which represents the number of the multi-paths whose information may be reported, and the first number and the second number may be equal or unequal, which is not limited in the embodiments of the present application.

Based on any of the above embodiments, in the downlink positioning scenario or the uplink and downlink joint positioning scenario, the measuring end is a terminal, and correspondingly, the above information transmission method may further include:

receiving at least one of a parameter type of the power parameter, the multipath parameter threshold or the length of the multipath time interval transmitted from a location management function (LMF) and/or a base station;
or,
determining at least one of a parameter type of the power parameter, the multipath parameter threshold or the length of the multipath time interval based on historical information, or based on historical information and channel change information.

In an embodiment, the information used to select the second path includes the parameter type of the power parameter, the multipath parameter threshold and the length of the multipath time interval, where the parameter type of the power parameter determines which type of power parameter is used to select the second path, and the parameter type of the power parameter may be absolute power or relative power, or may be a more detailed ratio of the power of the first path to a maximum power of all paths, or may be a ratio of the power of the first path to a sum of the power of all paths, etc. The multipath parameter threshold determines a threshold for selecting the second path from the power perspective, and the length of the multipath time interval determines a range for selecting the second path from the delay perspective. The parameter type of the power parameter, the multipath parameter threshold and the length of the multipath time interval may be configured uniformly or separately, or any one or more of them may be selected for configuration.

In case that the measuring end is the terminal, the parameter type of the power parameter, the multipath parameter threshold and the length of the multipath time interval may be configured by the position calculating end and/or the base station. In an embodiment, the position calculating end is an LMF. At least one of the parameter type of the power parameter, the multipath parameter threshold or the length of the multipath time interval transmitted from the LMF and/or the base station may be received, and the opportunity for the LMF and/or the base station to transmit the above information may be preconfigured before the positioning or may be re-configured during the positioning procedure, which is not limited in the embodiments of the present application.

For example, the LMF may configure at least one of the parameter type of the power parameter, the multipath parameter threshold or the length of the multipath time interval used for positioning measurement quantity to the terminal, and transmit at least one of the parameter type of the power parameter, the multipath parameter threshold or the length of the multipath time interval to the terminal based on long term evolution (LTE) positioning protocol (LPP) signaling, to achieve a pre-configuration or re-configuration for the at least one of the parameter type of the power parameter, the multipath parameter threshold or the length of the multipath time interval, where the positioning measurement quantity may be a downlink reference signal time difference (DL-RSTD), or a terminal Rx-Tx time difference, etc.

For another example, the base station may transmit at least one of the parameter type of the power parameter, the multipath parameter threshold or the length of the multipath time interval to the terminal based on radio resource control (RRC) signaling or physical layer signaling, to achieve a pre-configuration or re-configuration for the at least one of the parameter type of the power parameter, the multipath parameter threshold or the length of the multipath time interval.

In addition, in case that the measuring end is the terminal, at least one of the parameter type of the power parameter, the multipath parameter threshold or the length of the multipath time interval may be determined by the terminal itself.

Further, the terminal may pre-configure at least one of the parameter type of the power parameter, the multipath parameter threshold or the length of the multipath time interval based on the historical information, where the historical information may include information of the first detected path detected before, namely information of historical first detected path, for example, a signal to interference plus noise ratio (SINR) of a historical first detected path, or a reference signal receiving power (RSRP) of a historical first detected path, where both the SINR and RSRP of the historical first detected path may be obtained by taking a window on a power delay spectrum (PDP). In addition, the historical information may also include movement information of the terminal detected before, such as a movement speed of the terminal. For example, the terminal may perform configuration on the multipath parameter threshold based on the information of historical first detected path. For another example, the terminal may perform configuration on the length of the multipath time interval based on the historical movement information.

The terminal generally reconfigures at least one of the parameter type of the power parameter, the multipath parameter threshold or the length of the multipath time interval in case that the channel changes, at this point, the terminal may combine the historical information and the channel change information to reconfigure at least one of the parameter type of the power parameter, the multipath parameter threshold or the length of the multipath time interval. For example, in case of channel changes caused by terminal scenario changes, such as the terminal moves from indoor to outdoor, the length of the multipath time interval may be shortened. For another example, in case of channel changes caused by terminal speed changes, such as sudden acceleration of the terminal when changing vehicles, the length of the multipath time interval may be extended.

Based on any of the above embodiments, in case that the measuring end is the terminal, and the parameter type of the power parameter, the multipath parameter threshold and the length of the multipath time interval are configured by the position calculating end and/or the base station, the method may further include:

generating the channel change information; and transmitting the channel change information to the LMF and/or the base station, where the channel change information is used to trigger the LMF and/or the base station to reconfigure at least one of the parameter type of the power parameter, the multipath parameter threshold or the length of the multipath time interval.

The channel changes are caused by changes in factors such as the environment where the terminal is located and the status of the terminal. The terminal may monitor in real-time whether the factors such as the environment where the terminal is located and the status of the terminal, etc. change, or whether the channel changes, and if a change occurs, the channel change information indicating a channel change situation is generated and transmitted to the LMF and/or the base station to inform the LMF and/or the base station of the channel change situation of the terminal. After receiving the channel change information, the LMF and/or the base station triggers re-configuration for at least one of the parameter type of the power parameter, the multipath parameter threshold or the length of the multipath time interval, the LMF and/or base station may combine the historical information and the channel change information and generate at least one of a new parameter type of the power parameter, a new multipath parameter threshold or a new length of the multipath time interval, and transmit at least one of the generated new parameter type of the power parameter, new multipath parameter threshold or new length of the multipath time interval to the terminal to achieve re-configuration based on the channel change.

In the method provided by embodiments of the present application, the re-configuration on at least one of the parameter type of the power parameter, the multipath parameter threshold or the length of the multipath time interval is performed base on the channel change information, and the parameters used for selecting the second path may dynamically meet the actual situation of the measuring end, which ensures the reliability for selecting the second path.

Base on any of the above embodiments, in the uplink positioning scenario or the uplink and downlink joint positioning scenario, the measuring end is the base station, correspondingly, the information transmission method may further include:

receiving at least one of a parameter type of the power parameter, the multipath parameter threshold or the length of the multipath time interval transmitted from a location management function (LMF) and/or a terminal;
or,
determining at least one of a parameter type of the power parameter, the multipath parameter threshold or the length of the multipath time interval based on historical information, or based on historical information and channel change information.

In an embodiment, the information used to select the second path includes the parameter type of the power parameter, the multipath parameter threshold and the length of the multipath time interval, where the parameter type of the power parameter determines which type of power parameter is used to select the second path, and the parameter type of the power parameter may be absolute power or relative power, or may be a more detailed ratio of the power of the first path to a maximum power of all paths, or may be a ratio of the power of the first path to a sum of the power of all paths, etc. The multipath parameter threshold determines a threshold for selecting the second path from the power perspective, and the length of the multipath time interval determines a range for selecting the second path from the delay perspective. The parameter type of the power parameter, the multipath parameter threshold and the length of the multipath time interval may be configured uniformly or separately, or any one or more of them may be selected for configuration.

In case that the measuring end is the base station, the parameter type of the power parameter, the multipath parameter threshold and the length of the multipath time interval may be configured by the position calculating end and/or the terminal. In an embodiment, the position calculating end is an LMF. At least one of the parameter type of the power parameter, the multipath parameter threshold or the length of the multipath time interval transmitted from the LMF and/or the terminal may be received, and the opportunity for the LMF and/or the terminal to transmit the above information may be pre-configured before the positioning or may be re-configured during the positioning procedure, which is not limited in the embodiments of the present application.

For example, the LMF may configure at least one of the parameter type of the power parameter, the multipath parameter threshold or the length of the multipath time interval used for positioning measurement quantity to the base station, and transmit the at least one of the parameter type of the power parameter, the multipath parameter threshold or the length of the multipath time interval to the base station based on new radio (NR) positioning protocol A (NRPPa) signaling, to achieve a pre-configuration or re-configuration for the at least one of the parameter type of the power parameter, the multipath parameter threshold or the length of the multipath time interval, where the positioning measurement quantity may be an uplink relative time of arrival (UL-RTOA), or a next generation node B (gNB) Rx-Tx time difference, etc.

For another example, the terminal may transmit at least one of the parameter type of the power parameter, the multipath parameter threshold or the length of the multipath time interval to the base station based on radio resource control (RRC) signaling or physical layer signaling, to achieve a pre-configuration or re-configuration for the at least one of the parameter type of the power parameter, the multipath parameter threshold or the length of the multipath time interval.

In addition, in case that the measuring end is the base station, at least one of the parameter type of the power parameter, the multipath parameter threshold or the length of the multipath time interval may be determined by the base station itself.

Further, in case that at least one of the parameter type of the power parameter, the multipath parameter threshold or the length of the multipath time interval is preconfigured by the base station, the base station may perform the pre-configuration based on historical information, where the historical information may include information of the first detected path detected before, namely information of historical first detected path, for example, an SINR of a historical first detected path, or an RSRP of a historical first detected path. In addition, the historical information may also include movement information of the terminal detected before, such as a movement speed of the terminal. For example, the base station may perform configuration on the multipath parameter threshold based on the information of historical first detected path. For another example, the base station may perform configuration on the length of the multipath time interval based on the historical movement information.

The base station generally reconfigures at least one of the parameter type of the power parameter, the multipath parameter threshold or the length of the multipath time interval in case that the channel changes, at this point, the base station may combine the historical information and the channel change information to reconfigure at least one of the parameter type of the power parameter, the multipath parameter threshold or the length of the multipath time interval. For example, in case of channel changes caused by terminal scenario changes, such as the terminal moves from indoor to outdoor, the length of the multipath time interval may be shortened. For another example, in case of channel changes caused by terminal speed changes, such as sudden acceleration of the terminal when changing vehicles, the length of the multipath time interval may be extended.

Based on any of the above embodiments, in case that the measuring end is the base station, and the parameter type of the power parameter, the multipath parameter threshold and the length of the multipath time interval are configured by the position calculating end, the method may further include:

receiving the channel change information generated by the terminal, or generating the channel change information; and
transmitting the channel change information to the LMF, where the channel change information is used to trigger the LMF to reconfigure at least one of the parameter type of the power parameter, the multipath parameter threshold or the length of the multipath time interval.

In an embodiment, for the base station, the channel change information of the terminal may be detected and generated by the base station itself, or may be transmitted to the base station after being detected and generated by the terminal. For example, the base station may generate the channel change information itself, and transmit the channel change information to the LMF. For another example, the terminal may generate the channel change information and transmit the channel change information to the base station; and after receiving the channel change information transmitted from the terminal, the base station may forward the channel change information to the LMF to inform the LMF the channel change situation. After receiving the channel change information, the LMF triggers re-configuration of at least one of the parameter type of the power parameter, the multipath parameter threshold or the length of the multipath time interval, the LMF may combine the historical information and the channel change information and generate at least one of a new parameter type of the power parameter, a new multipath parameter threshold or a new length of the multipath time interval, and transmit at least one of the generated new parameter type of the power parameter, new multipath parameter threshold or new length of the multipath time interval to the base station to achieve re-configuration based on the channel change.

In the method provided by embodiments of the present application, the re-configuration on at least one of the parameter type of the power parameter, the multipath parameter threshold or the length of the multipath time interval is performed base on the channel change information, the parameters used for selecting the second path may dynamically meet the actual situation of the measuring end, which ensures the reliability for selecting the second path.

Based on any of the above embodiments, the parameter type of the power parameter may be absolute power or relative power.

FIG. 2 is a schematic diagram of path selection according to an embodiment of the present application. In the coordinate system in FIG. 2, the horizontal coordinates represent the delay, the vertical coordinates represent the power, *Path_1* is the first detected path, the position of *Path_1* on the horizontal coordinates is the delay *T1* of the first detected path, and the value *P_first_path* of *Path_1* on the vertical coordinates is the power of the first detected path. Assuming an arbitrary first path is *Path_i*, the value *P_i path* of *Path_i* on the vertical coordinates is the power of the first path. In addition, *P_max_path* shown in the figure represents the maximum power of all paths.

The parameter type of the power parameter may be expressed in any of the following four forms:

a ratio of power of the first path to a maximum power of all paths, which may be expressed as:

$$P\_i\_path/P\_max\_path;$$

a ratio of power of the first path to a sum of power for all paths, which may be expressed as: *P_i_path/P_total_path,* where *P_total_path* is the sum of power for all paths;
a ratio of power of the first path to power of the first detected path, which may be expressed as:

$$P\_i\_path/P\_first\_path;$$

or
power of the first path, that is, an absolute power of the first path, which may be expressed as: *P_i_path.*

In the four forms of the parameter type of the power parameter, the first three parameter types represent relative power, and the last parameter type represents absolute power. Values of the multipath parameter thresholds corresponding to the first three parameter types are within a range from 0 to 1, and a value of the multipath parameter threshold corresponding to the last parameter type is greater than 0.

In addition, the length of the multipath time interval is marked as *Δ T* in FIG. 2, combining the delay *T1* of the first detected path, the multipath time interval *[T1, T1 + ΔT]* may be located on the horizontal coordinates, and then the first path whose delay is within the multipath time interval may be obtained. On this basis, the multipath parameter threshold *Threshold_T* is also marked in FIG. 2, the first path in FIG. 2 whose power exceeds the dot-dash line determined based on *Threshold_T* and whose delay is within the multipath time interval *[T1, T1 + ΔT]* may be selected as the second path.

Based on any of the above embodiments, in case that the measuring end is a terminal, the measurement information of the second path includes at least one of a power parameter, arrival time, a time difference between transmission and reception, or a phase of the second path;

or,

in case that the measuring end is a base station, the measurement information of the second path includes at least one of a power parameter, arrival time, a time difference between transmission and reception, an angle of arrival, or a phase of the second path.

In an embodiment, the measuring end may filter and obtain each path by taking a window on a PDP and regenerate the channel impulse response (CIR) or channel frequency response (CFR), and then obtain a phase of each path on a specific subcarrier.

Further, the angle and phase of the multi-paths may be obtained by the following steps.

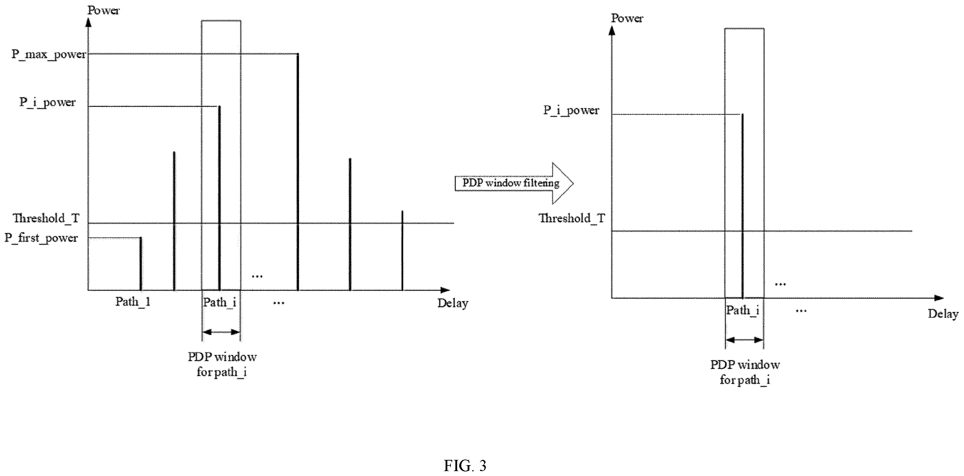

1. A window on a PDP is taken, and a length of the window only includes a target path (including energy dispersion of the target path). FIG. 3 is a schematic diagram of a mode for obtaining angle and phase according to an embodiment of the present application. It should be noted that, the target path here is an arbitrary second path, and PDP window for path_i in FIG. 3 is a PDP window for path_i;
2. CIR/CFR is regenerated based on the delay;
3. Phase information on the specific subcarrier is calculated, or angle-of-arrival (AOA) ranging estimation is performed to obtain the angle.

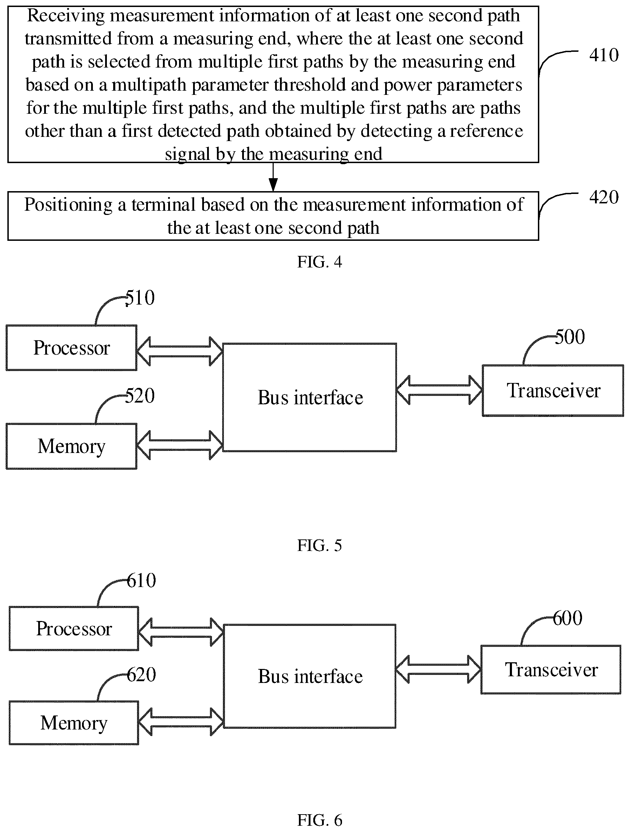

In addition, the present application further provides an information transmission method, applied to a position calculating end in a positioning scenario, such as a location management function (LMF). FIG. 4 is a second schematic flowchart of an information transmission method according to an embodiment of the present application. As show in FIG. 4, the method includes the following steps.

Step 410: receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end.

In an embodiment, when positioning, the measuring end may obtain multiple paths by detecting the reference signal, where the multiple paths include the first detected path and the first paths, the first detected path is the first of the multiple paths obtained by detecting the reference signal by the measuring end, and is the earliest path detected by the measuring end among the multiple paths, and except for the first detected path, other paths in the multiple paths may be denoted as the first paths.

The power parameter for each first path may be detected and obtained by the measuring end, where the power parameter is used to represent power of the first path. In an embodiment, the power parameter may represent a relative power of the first path, and the power parameter in this embodiment may be a ratio of the power of the first path to a reference power. For example, a ratio of the power of the first path to power of the first detected path, or a ratio of the power of the first path to a sum of power for all paths. In an embodiment, the power parameter may represent an absolute power of the first path, and the power parameter in this embodiment may be the absolute power of the first path.

It should be noted that, in the uplink positioning scenario, the measuring end is a base station, the reference signal is a sounding reference signal (SRS), a terminal transmits the SRS to the base station, and the base station may obtain association information of multiple paths by detecting the SRS. In the downlink positioning scenario, the measuring end is a terminal, the reference signal is a positioning reference signal (PRS), a base station transmits the PRS to the terminal, and the terminal may obtain association information of multiple paths by detecting the PRS. In the uplink and downlink joint positioning scenario, both a terminal and a base station are measuring ends, the terminal transmits an SRS to the base station, and the base station may obtain association information of multiple uplink paths by detecting the SRS; and the base station transmits a PRS to the terminal, and the terminal may obtain association information of multiple downlink paths by detecting the PRS.

After detecting and obtaining the power parameters for the multiple first paths, the measuring end may use the power parameter of each first path and a configured multipath parameter threshold for selecting the second path from the first paths, and transmit the measuring information of the second path to the position calculating end.

The multipath parameter threshold is a parameter threshold that belongs to a same parameter type of the power parameter. For example, when the power parameter represents the relative power, the multipath parameter threshold may be a value within a range from 0 to 1. For another example, when the power parameter represents the absolute power, the multipath parameter threshold may be a value greater than 0. The multipath parameter threshold is set for selecting the second path from the first paths by the measuring end. In an embodiment, the path whose power parameter is greater than or equal to the multipath parameter threshold is selected from the first paths as the second path. The second path obtained by selecting based on the multipath parameter threshold has a higher power, or its power is higher compared to power of other paths. The second path has a higher probability of being a direct path, and provides the position calculating end with a greater reference for positioning.

A simple and easy mode for selecting a path by the measuring end other than the first detected path to perform information reporting is provided by applying the multipath parameter threshold, the second path selected and obtained in this mode is the path that is needed for performing information reporting in addition to the first detected path. The second path may be one or multiple.

Further, the multipath parameter threshold may be configured by the measuring end, may be configured by a transmitting end of the reference signal to the measuring end, or may be configured by the position calculating end to the measuring end. In the positioning procedure, the multipath parameter threshold may be fixed, or re-configuration of the multipath parameter threshold may be triggered when factors such as the environment where the terminal is located and/or the status of the terminal change, which is not limited in the embodiments of the present application.

The position calculating end may receive the measurement information of at least one second path transmitted from the measuring end.

Step 420: positioning a terminal based on the measurement information of the at least one second path.

In an embodiment, after receiving the measurement information of the at least one second path, the position calculating end may perform terminal positioning based on the measurement information. Since the measurement information transmitted from the measuring end to the position calculating end is the measurement information of the second path selected based on the multipath parameter threshold, based on which the position calculating end may obtain more effective information when performing terminal positioning, thereby the reliability and accuracy of terminal positioning are ensured.

Further, when performing terminal positioning, the position calculating end may input the received measurement information of the first detected path and the measurement information of the at least one second path to a pre-trained position calculating model to obtain a positioning result output by the position calculating model, where the position calculating model may be constructed based on convolutional neural networks (CNN) or deep neural networks (DNN), etc. In an embodiment, the position calculating end may perform a NLOS determination based on the received measurement information of the first detected path and the measurement information of the at least one second path, and perform position calculating based on a determination result. In an embodiment, the position calculating end may apply the received measurement information of the first detected path and the measurement information of the at least one second path and perform fingerprint identification in a fingerprint database to achieve position calculating. The mode for position calculating is not limited in the embodiments of the present application.

In the method provided by embodiments of the present application, the measuring end selects the second path from the multiple first paths based on the multipath parameter threshold and the power parameters for the multiple first paths, which provides the position calculating end with more effective information for positioning, reduces the impact of noise and interference during positioning, and improves positioning performance.

Based on the above embodiments, the method may further include:

> determining at least one of a parameter type of the power parameter, the multipath parameter threshold or a length of a multipath time interval based on historical information; and
> transmitting at least one of the parameter type of the power parameter, the multipath parameter threshold or the length of the multipath time interval to the measuring end.

In an embodiment, the information used by the measuring end to select the second path includes the parameter type of the power parameter, the multipath parameter threshold and the length of the multipath time interval, where the parameter type of the power parameter determines which type of power parameter is used to select the second path, and the parameter type of the power parameter may be absolute power or relative power, or may be a more detailed ratio of the power of the first path to a maximum power of all paths, or may be a ratio of the power of the first path to a sum of the power of all paths, etc. The multipath parameter threshold determines a threshold for selecting the second path from the power perspective, and the length of the multipath time interval determines a range for selecting the second path from the delay perspective. The parameter type of the power parameter, the multipath parameter threshold and the length of the multipath time interval may be configured uniformly or separately by the position calculating end, or any one or more of them may be selected by the position calculating end for configuration. The configuration in this embodiment may be pre-configuration before the positioning, or may be re-configuration during the positioning procedure, which is not limited in the embodiments of the present application.

Before transmitting at least one of the parameter type of the power parameter, the multipath parameter threshold or the length of the multipath time interval to the measuring end, the position calculating end needs to determine a value of at least one of the parameter type of the power parameter, the multipath parameter threshold or the length of the multipath time interval. When the position calculating end determines at least one of the parameter type of the power parameter, the multipath parameter threshold or the length of the multipath time interval, it may be achieved based on the historical information. The historical information in this embodiment may include information of the first detected path received before, namely information of historical first detected path, such as a signal to interference plus noise ratio (SINR) of a historical first detected path, or a reference signal receiving power (RSRP) of a historical first detected path. In addition, the historical information may also include movement information of the terminal detected before, such as a movement speed of the terminal. For example, the position calculating end may perform configuration on the multipath parameter threshold based on the information of historical first detected path. For another example, the position calculating end may perform configuration on the length of the multipath time interval based on the historical movement information.

For example, in case that the position calculating end is an LMF and the measuring end is a terminal, the LMF may transmit at least one of the parameter type of the power parameter, the multipath parameter threshold or the length of the multipath time interval to the terminal through LPP signaling to achieve the pre-configuration or re-configuration of at least one of the parameter type of the power parameter, the multipath parameter threshold or the length of the multipath time interval.

In case that the position calculating end is an LMF and the measuring end is a base station, the LMF may transmit at least one of the parameter type of the power parameter, the multipath parameter threshold or the length of the multipath time interval to the base station through NRPPa signaling to achieve the pre-configuration or re-configuration of at least one of the parameter type of the power parameter, the multipath parameter threshold or the length of the multipath time interval.

Base on any of the above embodiments, determining at least one of the parameter type of the power parameter, the multipath parameter threshold or the length of the multipath time interval may include:
receiving channel change information transmitted from the terminal and/or a base station, and reconfiguring at least one of the parameter type of the power parameter, the multipath parameter threshold or the length of the multipath time interval based on the historical information and the channel change information.

In an embodiment, the channel changes are caused by changes in factors such as the environment where the terminal is located and the status of the terminal. The terminal may monitor in real-time whether the factors such as the environment where the terminal is located and the status of the terminal, etc. change, or whether the channel changes, and if a change occurs, the channel change information indicating a channel change situation is generated and transmitted to the position calculating end to inform the position calculating end of the channel change situation. In addition, the terminal may generate the channel change information indicating the channel change situation and transmit the channel change information to the base station. After receiving the channel change information, the base station may forward the channel change information to the position calculating end to inform the position calculating end of the channel change situation of the terminal.

After receiving the channel change information, the position calculating end may trigger the re-configuration of at least one of the parameter type of the power parameter, the multipath parameter threshold or the length of the multipath time interval, generate at least one of a new parameter type of the power parameter, a new multipath parameter threshold or a new length of the multipath time interval, and transmit at least one of the generated new parameter type of the power parameter, new multipath parameter threshold or new length of the multipath time interval to the measuring end to achieve re-configuration based on the channel change.

The position calculating end may combine the historical information and the channel change information to perform the re-configuration. For example, the terminal moves from indoor to outdoor, the position calculating end may shorten the length of the multipath time interval. For another example, for channel changes caused by terminal speed changes, such as sudden acceleration of the terminal when changing vehicles, the position calculating end may extend the length of the multipath time interval.

In the method provided by the embodiments of the present application, the re-configuration on at least one of the parameter type of the power parameter, the multipath parameter threshold or the length of the multipath time interval is performed base on the channel change information, and the parameters used for selecting the second path may dynamically meet the actual situation of the measuring end, which ensures the reliability for selecting the second path.

Base on any of the above embodiments, the parameter type of the power parameter is absolute power or relative power.

Referring to FIG. 2, the parameter type of the power parameter may be expressed in any of the following four forms:

a ratio of power of the first path to a maximum power of all paths, which may be expressed as:

$$P\_i\_path/P\_max\_path;$$

a ratio of power of the first path to a sum of power for all paths, which may be expressed as: $P\_i\_path/P\_total\_path,$ where $P\_total\_path$ is the sum of power for all paths;
a ratio of power of the first path to power of the first detected path, which may be expressed as:

$$P\_i\_path/P\_first\_path;$$

or
power of the first path, that is, an absolute power of the first path, which may be expressed as:
$P\_i\_path.$

In the four forms of the parameter type of the power parameter, the first three parameter types represent relative power, and the last parameter type represents absolute power. Values of the multipath parameter thresholds corresponding to the first three parameter types are within a range from 0 to 1, and a value of the multipath parameter threshold corresponding to the last parameter type is greater than 0.

Based on any of the above embodiments, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.

In an embodiment, the measuring end may filter and obtain each path by taking a window on a PDP and regenerate the channel impulse response (CIR) or channel frequency response (CFR), and then obtain a phase of each path on a specific subcarrier.

**Based** on any of the above embodiments, in the downlink positioning scenario, the measuring end is a terminal, and the position calculating end is an LMF. The base station, the terminal and the LMF perform the following operations respectively:

base station side:
step 1: transmitting a PRS signal;
terminal side:

step 1: receiving the parameter type of the power parameter, the multipath parameter threshold and the length of the multipath time interval informed by the LMF;
step 2: receiving the PRS signal;
step 3: estimating time of arrival (TOA) by combining with a PRS pilot frequency, and based on an obtained multipath parameter threshold $T$ and length of the multipath time interval $\Delta T,$ selecting the first N paths with the smallest delays among the first paths whose power parameter $P\_i\ path/P\_max\ path$ exceeds the multipath parameter threshold $T$ within the multipath time interval $[T1, T1 + \Delta T]$ as the multi-paths that need to be reported, namely the second paths; it should be noted that, $T1$ is an estimated delay of the first detected path, $T1 + \Delta T$ is the maximum delay of a path that may be selected as

the second path; $\Delta T$ is the length of the multipath time interval, the maximum value of $\Delta T$ is smaller than a length of a cyclic prefix (CP) and is associated with actual geometric environment;
step 4: regarding the delay, the relative power (that is, $P\_i\_path/P\_max\_path$), etc. of each second path selected in step 3 as the measurement information, and reporting the measurement information to the LMF;

LMF side:

step 1: the LMF generates the parameter type of the power parameter, the multipath parameter threshold and the length of the multipath time interval based on prior information of an RSRP of a historical first detected path, an SINR of the historical first detected path, and a scenario where the terminal is located, etc., and informs the terminal of a pre-defined parameter type of the power parameter, a pre-defined multipath parameter threshold and a pre-defined length of the multipath time interval through the LPP, where a value range of the multipath parameter threshold is 0 to 1; the multipath parameter threshold may be calculated by converting a downlink SINR (DL-SINR) of a known historical first detected path to a linear value, such as $SIN,$ and then the multipath parameter threshold is $N/S+Bias,$ where S represents a signal, $N$ represents noise, and $Bias$ is adjustment amount; and the length of the multipath time interval may be obtained by estimating an approximate range of propagation delay based on the RSRP of the historical first detected path;
step 2: receiving the measurement information of the first detected path and at least one second path transmitted from the terminal, and calculating a position using a trained CNN model.

In addition, in the subsequent positioning procedure, in case that the scenario where the terminal is located changes, such as the terminal moves from indoor to outdoor, the terminal at this point generates the channel change information and transmits the channel change information to the LMF. The LMF re-calculates the parameter type of the power parameter, the multipath parameter threshold and the length of the multipath time interval, and inform the terminal of the updated value though LPP. The terminal updates the multipath parameter threshold and the length of the multipath time interval, and performs measurement and positioning.
Based on any of the above embodiments, in the uplink positioning scenario, the measuring end is a base station, the position calculating end is an LMF, and at this point, the terminal is a target terminal that needs to be positioned. The base station, the terminal and the LMF perform the following operations respectively:

terminal side:
step 1: transmitting an SRS signal;
base station side:

step 1: receiving the parameter type of the power parameter, the multipath parameter threshold and the length of the multipath time interval informed by the LMF;
step 2: receiving the SRS signal;
step 3: combining with an SRS pilot frequency, and based on an obtained multipath parameter threshold $T$ and length of the multipath time interval $\Delta T,$ selecting the first N paths with the greatest power among the first paths whose power parameter $P\_i\_path/P\_total\_path$ exceeds the multipath parameter threshold $T$ within the multipath time interval $[T1, T1 + \Delta T]$ as the multi-paths that need to be reported, namely the second paths; it should be noted that, $T1$ is the estimated delay of the first detected path, $T1 + \Delta T$ is the maximum delay of a path that may be selected as the second path; $\Delta T$ is the length of the multipath time interval, the maximum value of $\Delta T$ is smaller than a length of a cyclic prefix (CP) and is associated with actual geometric environment;
step 4: regarding the delay, the relative power (that is, $P\_i\_path/P\_total\_path$), an angle, a phase, etc. of each second path selected in step 3 as the measurement information, and reporting the measurement information to the LMF;

LMF side:

step 1: the LMF generates the parameter type of the power parameter, the multipath parameter threshold and the length of the multipath time interval based on prior information of an RSRP of a historical first detected path, an SINR of the historical first detected path, and a scenario where the terminal is located, etc., and informs a transmit and receive point (TRP) of a pre-defined parameter type of the power parameter, a pre-defined multipath parameter threshold and a pre-defined length of the multipath time interval through the NRPPa, where a value range of the multipath parameter threshold is 0 to 1; the multipath parameter threshold may be calculated by converting channel state information (CSI)-SINR (CSI-SINR) to a linear value such as $S/N,$ and the multipath parameter threshold is $N/S+Bias,$ where S represents a signal, $N$ represents noise, and $Bias$ is adjustment amount; and the length of the multipath time interval may be obtained by estimating an approximate range of propagation delay based on the RSRP of the historical first detected path, the maximum value of which is smaller than a CP length and is associated with actual geometric environment;
step 2: receiving the measurement information of the first detected path and at least one second path, and calculating a position using a trained DNN model.

In addition, in the subsequent positioning procedure, in case that the scenario where the terminal is located changes from walking to riding, and the terminal speed suddenly changes from 3 km/h to 30 km/h, the terminal at this point re-calculates the parameter type of the power parameter, the multipath parameter threshold and the length of the multipath time interval, and performs measurement and positioning.

Based on any of the above embodiments, in the downlink positioning scenario, the measuring end is a terminal, and the position calculating end is an LMF. In case that a preset parameter type is the absolute power, whether to generate and reconfigure the parameter type of the power parameter may be determined based on actual needs. At this point, the base station, the terminal and the LMF perform the following operations respectively:

base station side:

step 1: generating the multipath parameter threshold and the length of the multipath time interval based on prior information of an RSRP of a historical first detected path, an SINR of a historical first detected path, a scenario where the terminal is located, etc., and inform the terminal of the multipath parameter threshold and the length of the multipath time interval through an RRC signaling;
step 2: transmitting a PRS signal;

terminal side:

step 1: receiving the multipath parameter threshold and the length of the multipath time interval informed by the base station;
step 2: receiving the PRS signal;
step 3: performing a TOA estimation combining a PRS pilot frequency, and based on an obtained multipath parameter threshold $T$ and length of the multipath time interval $\varDelta T,$ selecting the first N paths with the smallest delay among the paths whose power parameter $P\_i\_path$ exceeds the multipath parameter threshold $T$ within the multipath time interval $[T1, T1 + \varDelta T]$ as the multi-paths that need to be reported, namely the second paths; it should be noted that, $T1$ is the estimated delay of the first detected path, $T1 + \varDelta T$ is the maximum delay of a path that may be selected as the second path; $\varDelta T$ is the length of the multipath time interval, the maximum value of $\varDelta T$ is smaller than a length of a cyclic prefix (CP) and is associated with actual geometric environment, a unit of $P\_i\ path$ is dBm, the multipath parameter threshold may be calculated and obtained based on a DL-RSRP of a historical first detected path; in case that $DL\text{-}RSRP=a,$ the multipath parameter threshold is $a+Bias,$ where $Bias$ is the adjustment amount;
step 4: regarding the delay, the absolute power (that is, $P\_i\_path),$ etc. of each second path selected in step 3 as the measurement information, and reporting the measurement information to the LMF;

LMF side:

step 1: receiving the measurement information of the first detected path and at least one second path, and performing NLOS determination;
step 2: performing position calculation through a traditional positioning mode.

In the subsequent positioning procedure, in case that the scenario where the terminal is located changes from walking to riding, and the terminal speed suddenly changes from 3 km/h to 30 km/h, the terminal at this point re-calculates the multipath parameter threshold and the length of the multipath time interval, and performs measurement and positioning.

Based on any of the above embodiments, in the uplink and downlink joint positioning scenario, both a terminal and a base station are the measuring ends, and the position calculating end is an LMF. The base station, the terminal and the LMF perform the following operations respectively:

base station side:

step 1: transmitting a PRS signal;
step 2: receiving a SRS signal;
step 3: combining with a SRS pilot frequency, and based on prior information of an uplink-RSRP (UP-RSRP) of a historical first detected path, a CSI-SINR of a historical first detected path, a scenario where the terminal is located, etc., determining the multipath parameter threshold $T$ and length of the multipath time interval $\varDelta T,$ and selecting the first N paths with the greatest power among the first paths whose power parameter $P\_i\_path/P\_first\_path$ exceeds the multipath parameter threshold $T$ within the multipath time interval $[T1, T1 + \varDelta T]$ as the multi-paths that need to be reported, namely the second paths; it should be noted that, $T1$ is the estimated delay of the first detected path, $T1 + \varDelta T$ is the maximum delay of a path that may be selected as the second path; $\varDelta T$ is the length of the multipath time interval, the maximum value of $\varDelta T$ is smaller than a length of a cyclic prefix (CP) and is associated with actual geometric environment.

step 4: generating a time difference between transmission and reception at TRP by subtracting transmitting time from receiving time for a corresponding N+1 paths, and reporting the time difference; at this point, power, a phase and an angle of a receiving path corresponding to the above time difference also need to be reported;

terminal side:

step 1: receiving the PRS signal;

step 2: performing TOA estimation combining a PRS pilot frequency, and based on prior information of a DL-RSRP of a historical first detected path, a CSI-SINR of a historical first detected path, a scenario where the terminal is located, etc., determining a multipath parameter threshold $T'$ and a length of the multipath time interval $\Delta T'$; it should be noted that, in the joint positioning scenario, the multipath parameter thresholds and the lengths of the multipath time interval configured respectively by the base station side and the terminal side may be the same or different; and selecting the first N paths with the greatest power among the first paths whose power parameter $P\_i\_path/P\_first\_path$ exceeds the multipath parameter threshold $T'$ within the multipath time interval $[T1', T1'+ \Delta T']$ as the multipaths that need to be reported, namely the second paths; it should be noted that, $T1'$ is the estimated delay of the first detected path, $T1'+ \Delta T'$ is the maximum delay of a path that may be selected as the second path; $\Delta T'$ is the length of the multipath time interval, the maximum value of $\Delta T'$ is smaller than a length of a cyclic prefix (CP) and is associated with actual geometric environment;

step 3: transmitting the SRS signal;

step 4: generating a time difference between transmission and reception at terminal side by subtracting transmitting time from receiving time for a corresponding N+1 paths, and reporting the time difference; at this point, power (that is, $P\_i\_path/P\_first\_path)$, a phase and an angle of a receiving path corresponding to the above time difference also need to be reported;

LMF side:
step 1: receiving the time differences between transmission and reception for the N+1 paths reported by the terminal and the base station respectively, receiving information of the power, the phase and the angle of the corresponding receiving path, and calculating a position by fingerprint identification based on a fingerprint database.

FIG. 5 is a schematic structural diagram of a measuring end according to an embodiment of the present application. As shown in FIG. 5, the measuring end includes a memory 520, a transceiver 500, and a processor 510,
where the memory 520 is used to store a computer program; the transceiver 500 is used to transmit and receive data under control of the processor 510; and the processor 510 is used to read the computer program in the memory and perform the following operations of:

determining power parameters for multiple first paths, where the multiple first paths are paths other than a first detected path obtained by detecting a reference signal by the measuring end;
selecting at least one second path from the multiple first paths based on a multipath parameter threshold and the power parameters for the multiple first paths; and
transmitting measurement information of the at least one second path.

In FIG. 5, a bus architecture may include any number of interconnected buses and bridges, which are linked together through various circuits of one or more processors represented by processor 510 and one or more memories represented by the memory 520. The bus architecture may also link together various other circuits, such as peripherals, voltage regulators, and power management circuits, which are well known in the art and therefore not further described herein. The bus interface provides an interface. The transceiver 500 may include multiple elements, i.e., include a transmitter and a receiver, units for providing communication with various other devices over transmission media including wireless channels, wired channels, fiber optic cables, and the like.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), the processor may also use a multi-core architecture.

The processor is configured to execute any of the methods applied to a measuring end provided by the embodiments of the present application according to the obtained executable instructions by invoking the computer program stored in the memory. The processor and memory may also be physically separated.

In an embodiment, selecting the at least one second path from the multiple first paths based on the multipath parameter threshold and the power parameters for the multiple first paths includes:

selecting the at least one second path from the multiple first paths based on the multipath parameter threshold, the power parameters for the multiple first paths, a multipath time interval and delays of the multiple first paths,

where the multipath time interval is determined based on a length of the multipath time interval and a delay of the first detected path.

In an embodiment, selecting the at least one second path from the multiple first paths based on the multipath parameter threshold, the power parameters for the multiple first paths, the multipath time interval and the delays of the multiple first paths includes:

selecting at least one first candidate path from the multiple first paths, where the first candidate path is the first path of which the power parameter is greater than or equal to the multipath parameter threshold and the delay is within the multipath time interval; and selecting the at least one second path from the at least one first candidate path based on a delay and/or a power parameter of the at least one first candidate path.

In an embodiment, selecting the at least one second path from the at least one first candidate path based on the delay and/or the power parameter of the at least one first candidate path includes:

determining top a first number of the first candidate paths in ascending order of the delays as the second paths;
or,
determining top a second number of the first candidate paths in descending order of the power parameters as the second paths.

In an embodiment, in case that the measuring end is a terminal, the operations further include:

receiving at least one of a parameter type of the power parameter, the multipath parameter threshold or the length of the multipath time interval transmitted from a location management function (LMF) and/or a base station;
or,
determining at least one of a parameter type of the power parameter, the multipath parameter threshold or the length of the multipath time interval based on historical information, or based on historical information and channel change information.

In an embodiment, the operations further include:

generating the channel change information; and transmitting the channel change information to the LMF and/or the base station, where the channel change information is used to trigger the LMF and/or the base station to reconfigure at least one of the parameter type of the power parameter, the multipath parameter threshold or the length of the multipath time interval.

In an embodiment, in case that the measuring end is a base station, the operations further include:

receiving at least one of a parameter type of the power parameter, the multipath parameter threshold or the length of the multipath time interval transmitted from a location management function (LMF) and/or a terminal;
or,
determining at least one of a parameter type of the power parameter, the multipath parameter threshold or the length of the multipath time interval based on historical information, or based on historical information and channel change information.

In an embodiment, the operations further include:

receiving the channel change information generated by the terminal, or generating the channel change information; and transmitting the channel change information to the LMF, where the channel change information is used to trigger the LMF to reconfigure at least one of the parameter type of the power parameter, the multipath parameter threshold or the length of the multipath time interval.

In an embodiment, the parameter type of the power parameter is absolute power or relative power.
In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.
It should be noted that, the above measuring end according to the embodiments of the present application is able to perform all the method steps in the above-mentioned method embodiments applied to the measuring end, and achieve the same effect. The same parts and beneficial effects as the method embodiments are not repeated here.
FIG. 6 is a schematic structural diagram of a position calculating end according to an embodiment of the present application. As shown in FIG. 6, the position calculating end includes a storage 620, a transceiver 600, and a processor 610,

where the memory 620 is used to store a computer program; the transceiver 600 is used to transmit and receive data under control of the processor 610; and the processor 610 is used to read the computer program in the memory and perform the following operations of:

receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and

positioning a terminal based on the measurement information of the at least one second path.

In an embodiment, the transceiver 600 is used to transmit and receive data under control of the processor 610.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits, which are well known in the art and therefore not further described herein. The bus interface provides an interface. The transceiver 600 may include multiple elements, i.e., include a transmitter and a receiver, units for providing communication with various other devices over transmission media including wireless channels, wired channels, fiber optic cables, and the like.

The processor 610 is responsible for managing the bus architecture and general processing, and the memory 620 may store data used by the processor 610 when performing operations.

**In** an embodiment, the processor 610 may be a central processing unit (CPU), an application specific integrated circuit (ASIC), a field-programmable gate array (FPGA), or a complex programmable logic device (CPLD), the processor may also use a multi-core architecture.

**The** processor is configured to execute any of the methods applied to the position calculating end provided by the embodiments of the present application according to the obtained executable instructions by invoking the computer program stored in the memory. The processor and memory may also be physically separated.

In an embodiment, the operations further include:

determining at least one of a parameter type of the power parameter, the multipath parameter threshold or a length of a multipath time interval based on historical information; and

transmitting at least one of the parameter type of the power parameter, the multipath parameter threshold or the length of the multipath time interval to the measuring end.

In an embodiment, determining at least one of the parameter type of the power parameter, the multipath parameter threshold or the length of the multipath time interval includes:

receiving channel change information transmitted from the terminal and/or a base station, and reconfiguring at least one of the parameter type of the power parameter, the multipath parameter threshold or the length of the multipath time interval based on the historical information and the channel change information.

In an embodiment, the parameter type of the power parameter is absolute power or relative power.

In an embodiment, in case that the measuring end is a terminal, the measurement information of the second path includes at least one of a power parameter, arrival time, a time difference between transmission and reception, or a phase of the second path;

or,

in case that the measuring end is a base station, the measurement information of the second path includes at least one of a power parameter, arrival time, a time difference between transmission and reception, an angle of arrival, or a phase of the second path.

It should be noted that, the above position calculating end according to the embodiments of the present application is able to perform all the method steps in the above-mentioned method embodiments applied to the position calculating end, and achieve the same effect. The same parts and beneficial effects as the method embodiments are not repeated here.

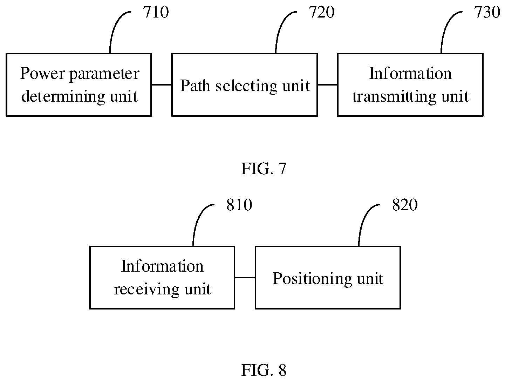

FIG. 7 is a first schematic structural diagram of an information transmission apparatus according to an embodiment of the present application. As shown in FIG. 7, the apparatus includes:

a power parameter determining unit 710, used for determining power parameters for multiple first paths, where the multiple first paths are paths other than a first detected path obtained by detecting a reference signal by a measuring end;

a path selecting unit 720, used for selecting at least one second path from the multiple first paths based on a multipath parameter threshold and the power parameters for the multiple first paths; and

an information transmitting unit 730, used for transmitting measurement information of the at least one second path.

In an embodiment, the path selecting unit 720 is further used for:

selecting the at least one second path from the multiple first paths based on the multipath parameter threshold, the power parameters for the multiple first paths, a multipath time interval and delays of the multiple first paths,

where the multipath time interval is determined based on a length of the multipath time interval and a delay of the first detected path.

In an embodiment, the path selecting unit 720 includes:

a candidate path selecting subunit, used for selecting at least one first candidate path from the multiple first paths, where the first candidate path is the first path of which the power parameter is greater than or equal to the multipath parameter threshold and the delay is within the multipath time interval; and
a second path selecting subunit, used for selecting the at least one second path from the at least one first candidate path based on a delay and/or a power parameter of the at least one first candidate path.

In an embodiment, the second path selecting subunit is further used for:

determining top a first number of the first candidate paths in ascending order of the delays as the second paths;
or,
determining top a second number of the first candidate paths in descending order of the power parameters as the second paths.

In an embodiment, in case that the measuring end is a terminal, the information transmission apparatus further includes a first configuring unit, used for:

receiving at least one of a parameter type of the power parameter, the multipath parameter threshold or the length of the multipath time interval transmitted from a location management function (LMF) and/or a base station;
or,
determining at least one of a parameter type of the power parameter, the multipath parameter threshold or the length of the multipath time interval based on historical information, or based on historical information and channel change information.

In an embodiment, the information transmission apparatus further includes a first channel change transmitting unit, used for:

generating the channel change information; and
transmitting the channel change information to the LMF and/or the base station, where the channel change information is used to trigger the LMF and/or the base station to reconfigure at least one of the parameter type of the power parameter, the multipath parameter threshold or the length of the multipath time interval.

In an embodiment, in case that the measuring end is a base station, the information transmission apparatus further includes a second configuring unit, used for:

receiving at least one of a parameter type of the power parameter, the multipath parameter threshold or the length of the multipath time interval transmitted from a location management function (LMF) and/or a terminal;
or,
determining at least one of a parameter type of the power parameter, the multipath parameter threshold or the length of the multipath time interval based on historical information, or based on historical information and channel change information.

In an embodiment, the information transmission apparatus further includes a second channel change transmitting unit, used for:

receiving the channel change information generated by the terminal, or generating the channel change information; and
transmitting the channel change information to the LMF, where the channel change information is used to trigger the LMF to reconfigure at least one of the parameter type of the power parameter, the multipath parameter threshold or the length of the multipath time interval.

In an embodiment, the parameter type of the power parameter is absolute power or relative power.
In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.
It should be noted that, the above information transmission apparatus according to the embodiments of the present application is able to perform all the method steps in the above-mentioned method embodiments applied to the measuring end, and achieve the same effect. The same parts and beneficial effects as the method embodiments are not repeated here.
FIG. 8 is a second schematic structural diagram of an information transmission apparatus according to an embodiment of the present application. As shown in FIG. 8, the apparatus includes:

an information receiving unit 810, used for receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and

a positioning unit 820, used for positioning a terminal based on the measurement information of the at least one second path.

In an embodiment, the information transmission apparatus further includes:

a configuration determining unit, used for determining at least one of a parameter type of the power parameter, the multipath parameter threshold or a length of a multipath time interval based on historical information; and

a third configuring unit, used for transmitting at least one of the parameter type of the power parameter, the multipath parameter threshold or the length of the multipath time interval to the measuring end.

In an embodiment, the configuration determining unit is further used for:
receiving channel change information transmitted from the terminal and/or a base station, and reconfiguring at least one of the parameter type of the power parameter, the multipath parameter threshold or the length of the multipath time interval based on the historical information and the channel change information.

In an embodiment, the parameter type of the power parameter is absolute power or relative power.

In an embodiment, in case that the measuring end is a terminal, the measurement information of the second path includes at least one of a power parameter, arrival time, a time difference between transmission and reception, or a phase of the second path;
or,
in case that the measuring end is a base station, the measurement information of the second path includes at least one of a power parameter, arrival time, a time difference between transmission and reception, an angle of arrival, or a phase of the second path.

It should be noted that, the above information transmission apparatus according to the embodiments of the present application is able to perform all the method steps in the above-mentioned method embodiments applied to the position calculating end, and achieve the same effect. The same parts and beneficial effects as the method embodiments are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

An embodiment of the present application provides a processor readable storage medium storing a computer program that, when executed by a processor, causes the processor to perform the methods provided by the above embodiments, including:

determining power parameters for multiple first paths, where the multiple first paths are paths other than a first detected path obtained by detecting a reference signal by the measuring end;

selecting at least one second path from the multiple first paths based on a multipath parameter threshold and the power parameters for the multiple first paths; and

transmitting measurement information of the at least one second path.

Or, the method may include:

receiving measurement information of at least one second path transmitted from a measuring end, where the at least one second path is selected from multiple first paths by the measuring end based on a multipath parameter threshold and power parameters for the multiple first paths, and the multiple first paths are paths other than a first detected path obtained by detecting a reference signal by the measuring end; and

positioning a terminal based on the measurement information of the at least one second path.

It should be noted that, the processor readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It should also be noted that, the solutions according to the embodiments of the present application may be applicable to various systems, for example, 5G systems. For example, the applicable systems may be a global system of mobile communication (GSM) system, a code division multiple access (CDMA) system, a wide-band code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a positioning end device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The base station in the embodiments of the present application may include multiple cells providing services for the terminal device. Depending on the specific scenario, the base station may be called an access point, or a device communicating with a wireless terminal device through one or more sectors on the air interface in the access network, or other names. The base station may be used for exchanging received air frames with internet protocol (IP) packets, and acting as a router between the wireless terminal device and the rest of the access network, where the rest of the access network may include an IP communication network. The base station may also coordinate attribute management for the air interface. For example, the base station in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the base station may include a centralized unit (CU) node and a distributed unit (DU) node, and the centralized unit and the distributed unit may be geographically separated.

A base station and a terminal device may each use one or more antennas for multi input multi output (MIMO) transmission. MIMO transmission may be single user MIMO (SU-MIMO) or multi user MIMO (MU-MIMO). Depending on the state and number of antenna combinations, MIMO transmission may be 2D-MIMO, 3D-MIMO, FD-MIMO or massive-MIMO, or it may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may be stored in processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

**Claims**

1. An information transmission method, applied to a measuring end, comprising:

   determining power parameters for multiple first paths, wherein the multiple first paths are paths other than a first detected path obtained by detecting a reference signal by the measuring end; selecting at least one second path from the multiple first paths based on a multipath parameter threshold and the power parameters for the multiple first paths; and transmitting measurement information of the at least one second path.

2. The method of claim 1, wherein selecting the at least one second path from the multiple first paths based on the multipath parameter threshold and the power parameters for the multiple first paths comprises:

   selecting the at least one second path from the multiple first paths based on the multipath parameter threshold, the power parameters for the multiple first paths, a multipath time interval and delays of the multiple first paths, wherein the multipath time interval is determined based on a length of the multipath time interval and a delay of the first detected path.

3. The method of claim 2, wherein selecting the at least one second path from the multiple first paths based on the multipath parameter threshold, the power parameters for the multiple first paths, the multipath time interval and the delays of the multiple first paths comprises:

   selecting at least one first candidate path from the multiple first paths, wherein the first candidate path is the first path of which the power parameter is greater than or equal to the multipath parameter threshold and the delay is within the multipath time interval; and selecting the at least one second path from the at least one first candidate path based on a delay and/or a power parameter of the at least one first candidate path.

4. The method of claim 3, wherein selecting the at least one second path from the at least one first candidate path based on the delay and/or the power parameter of the at least one first candidate path comprises:

   determining top a first number of the first candidate paths in ascending order of the delays as the second paths;
   or,
   determining top a second number of the first candidate paths in descending order of the power parameters as the second paths.

5. The method of any one of claims 2 to 4, wherein in case that the measuring end is a terminal, the method further comprises:

   receiving at least one of a parameter type of the power parameter, the multipath parameter threshold or the length of the multipath time interval transmitted from a location management function, LMF, and/or a base station;
   or,
   determining at least one of a parameter type of the power parameter, the multipath parameter threshold or the length of the multipath time interval based on historical information, or based on historical information and channel change information.

6. The method of claim 5, further comprising:

   generating the channel change information; and transmitting the channel change information to the LMF and/or the base station, wherein the channel change information is used to trigger the LMF and/or the base station to reconfigure at least one of the parameter type of the power parameter, the multipath parameter threshold or the length of the multipath time interval.

7. The method of any one of claims 2 to 4, wherein in case that the measuring end is a base station, the method further comprises:

receiving at least one of a parameter type of the power parameter, the multipath parameter threshold or the length of the multipath time interval transmitted from a location management function, LMF, and/or a terminal; or, determining at least one of a parameter type of the power parameter, the multipath parameter threshold or the length of the multipath time interval based on historical information, or based on historical information and channel change information.

8. The method of claim 7, further comprising:

receiving the channel change information generated by the terminal, or generating the channel change information; and transmitting the channel change information to the LMF, wherein the channel change information is used to trigger the LMF to reconfigure at least one of the parameter type of the power parameter, the multipath parameter threshold or the length of the multipath time interval.

9. The method of any one of claims 1 to 4, wherein the parameter type of the power parameter is absolute power or relative power.

10. The method of any one of claims 1 to 4, wherein in case that the measuring end is a terminal, the measurement information of the second path comprises at least one of a power parameter, arrival time, a time difference between transmission and reception, or a phase of the second path; or, in case that the measuring end is a base station, the measurement information of the second path comprises at least one of a power parameter, arrival time, a time difference between transmission and reception, an angle of arrival, or a phase of the second path.

11. An information transmission method, applied to a position calculating end, comprising:

receiving measurement information of at least one second path transmitted from a measuring end, wherein the at least one second path is selected from multiple first paths by the measuring end based on a multipath parameter threshold and power parameters for the multiple first paths, and the multiple first paths are paths other than a first detected path obtained by detecting a reference signal by the measuring end; and positioning a terminal based on the measurement information of the at least one second path.

12. The method of claim 11, further comprising:

determining at least one of a parameter type of the power parameter, the multipath parameter threshold or a length of a multipath time interval based on historical information; and transmitting at least one of the parameter type of the power parameter, the multipath parameter threshold or the length of the multipath time interval to the measuring end.

13. The method of claim 12, wherein determining at least one of the parameter type of the power parameter, the multipath parameter threshold or the length of the multipath time interval comprises:
receiving channel change information transmitted from the terminal and/or a base station, and reconfiguring at least one of the parameter type of the power parameter, the multipath parameter threshold or the length of the multipath time interval based on the historical information and the channel change information.

14. The method of any one of claims 11 to 13, wherein the parameter type of the power parameter is absolute power or relative power.

15. The method of any one of claims 11 to 13, wherein in case that the measuring end is a terminal, the measurement information of the second path comprises at least one of a power parameter, arrival time, a time difference between transmission and reception, or a phase of the second path; or, in case that the measuring end is a base station, the measurement information of the second path comprises at least one of a power parameter, arrival time, a time difference between transmission and reception, an angle of arrival, or a phase of the second path.

16. A measuring end, comprising a memory, a transceiver and a processor, wherein the memory is used to store a computer program, the transceiver is used to transmit and receive data under control of the processor, and the processor is used to read the computer program in the memory and perform the following operations of:

determining power parameters for multiple first paths, wherein the multiple first paths are paths other than a first detected path obtained by detecting a reference signal by the measuring end; selecting at least one second path from the multiple first paths based on a multipath parameter threshold and the power parameters for the multiple first paths; and transmitting measurement information of the at least one second path.

17. The measuring end of claim 16, wherein selecting the at least one second path from the multiple first paths based on the multipath parameter threshold and the power parameters for the multiple first paths comprises:

selecting the at least one second path from the multiple first paths based on the multipath parameter threshold, the power parameters for the multiple first paths, a multipath time interval and delays of the multiple first paths, wherein the multipath time interval is determined based on a length of the multipath time interval and a delay of the first detected path.

18. The measuring end of claim 17, wherein selecting the at least one second path from the multiple first paths based on the multipath parameter threshold, the power parameters for the multiple first paths, the multipath time interval and the delays of the multiple first paths comprises:

selecting at least one first candidate path from the multiple first paths, wherein the first candidate path is the first path of which the power parameter is greater than or equal to the multipath parameter threshold and the delay is within the multipath time interval; and selecting the at least one second path from the at least one first candidate path based on a delay and/or a power parameter of the at least one first candidate path.

19. The measuring end of claim 18, wherein selecting the at least one second path from the at least one first candidate path based on the delay and/or the power parameter of the at least one first candidate path comprises:

determining top a first number of the first candidate paths in ascending order of the delays as the second paths; or, determining top a second number of the first candidate paths in descending order of the power parameters as the second paths.

20. The measuring end of any one of claims 17 to 19, wherein in case that the measuring end is a terminal, the operations further comprise:

receiving at least one of a parameter type of the power parameter, the multipath parameter threshold or the length of the multipath time interval transmitted from a location management function, LMF, and/or a base station; or, determining at least one of a parameter type of the power parameter, the multipath parameter threshold or the length of the multipath time interval based on historical information, or based on historical information and channel change information.

21. The measuring end of claim 20, wherein the operations further comprise:

generating the channel change information; and transmitting the channel change information to the LMF and/or the base station, wherein the channel change information is used to trigger the LMF and/or the base station to reconfigure at least one of the parameter type of the power parameter, the multipath parameter threshold or the length of the multipath time interval.

22. The measuring end of any one of claims 17 to 19, wherein in case that the measuring end is a base station, the operations further comprise:

receiving at least one of a parameter type of the power parameter, the multipath parameter threshold or the length of the multipath time interval transmitted from a location management function, LMF, and/or a terminal; or, determining at least one of a parameter type of the power parameter, the multipath parameter threshold or the length of the multipath time interval based on historical information, or based on historical information and channel change information.

23. The measuring end of claim 22, wherein the operations further comprise:

receiving the channel change information generated by the terminal, or generating the channel change information; and transmitting the channel change information to the LMF, wherein the channel change information is used to trigger the LMF to reconfigure at least one of the parameter type of the power parameter, the multipath parameter threshold or the length of the multipath time interval.

**24.** The measuring end of any one of claims 16 to 19, wherein the parameter type of the power parameter is absolute power or relative power.

**25.** The measuring end of any one of claims 16 to 19, wherein in case that the measuring end is a terminal, the measurement information of the second path comprises at least one of a power parameter, arrival time, a time difference between transmission and reception, or a phase of the second path; or,

in case that the measuring end is a base station, the measurement information of the second path comprises at least one of a power parameter, arrival time, a time difference between transmission and reception, an angle of arrival, or a phase of the second path.

**26.** A position calculating end, comprising a memory, a transceiver and a processor, wherein the memory is used to store a computer program, the transceiver is used to transmit and receive data under control of the processor, and the processor is used to read the computer program in the memory and perform the following operations of:

receiving measurement information of at least one second path transmitted from a measuring end, wherein the at least one second path is selected from multiple first paths by the measuring end based on a multipath parameter threshold and power parameters for the multiple first paths, and the multiple first paths are paths other than a first detected path obtained by detecting a reference signal by the measuring end; and

positioning a terminal based on the measurement information of the at least one second path.

**27.** The position calculating end of claim 26, wherein the operations further comprise:

determining at least one of a parameter type of the power parameter, the multipath parameter threshold or a length of a multipath time interval based on historical information; and

transmitting at least one of the parameter type of the power parameter, the multipath parameter threshold or the length of the multipath time interval to the measuring end.

**28.** The position calculating end of claim 27, wherein determining at least one of the parameter type of the power parameter, the multipath parameter threshold or the length of the multipath time interval comprises: receiving channel change information transmitted from the terminal and/or a base station, and reconfiguring at least one of the parameter type of the power parameter, the multipath parameter threshold or the length of the multipath time interval based on the historical information and the channel change information.

**29.** The position calculating end of any one of claims 26 to 28, wherein the parameter type of the power parameter is absolute power or relative power.

**30.** The position calculating end of any one of claims 26 to 28, wherein in case that the measuring end is a terminal, the measurement information of the second path comprises at least one of a power parameter, arrival time, a time difference between transmission and reception, or a phase of the second path; or,

in case that the measuring end is a base station, the measurement information of the second path comprises at least one of a power parameter, arrival time, a time difference between transmission and reception, an angle of arrival, or a phase of the second path.

**31.** An information transmission apparatus, comprising:

a power parameter determining unit, used for determining power parameters for multiple first paths, wherein the multiple first paths are paths other than a first detected path obtained by detecting a reference signal by a measuring end; a path selecting unit, used for selecting at least one second path from the multiple first paths based on a multipath parameter threshold and the power parameters for the multiple first paths; and an information transmitting unit, used for transmitting measurement information of the at least one second path.

**32.** The information transmission apparatus of claim 31, wherein the path selecting unit is further used for:

selecting the at least one second path from the multiple first paths based on the multipath parameter threshold, the power parameters for the multiple first paths, a multipath time interval and delays of the multiple first paths, wherein the multipath time interval is determined based on a length of the multipath time interval and a delay of the first detected path.

**33.** The information transmission apparatus of claim 32, wherein the path selecting unit comprises:

a candidate path selecting subunit, used for selecting at least one first candidate path from the multiple first paths, wherein the first candidate path is the first path of which the power parameter is greater than or equal to the multipath parameter threshold and the delay is within the multipath time interval; and

a second path selecting subunit, used for selecting the at least one second path from the at least one first candidate path based on a delay and/or a power parameter of the at least one first candidate path.

34. The information transmission apparatus of claim 33, wherein the second path selecting subunit is further used for:

determining top a first number of the first candidate paths in ascending order of the delays as the second paths;
or,
determining top a second number of the first candidate paths in descending order of the power parameters as the second paths.

35. The information transmission apparatus of any one of claims 32 to 34, wherein in case that the measuring end is a terminal, the information transmission apparatus further comprises a first configuring unit, used for:

receiving at least one of a parameter type of the power parameter, the multipath parameter threshold or the length of the multipath time interval transmitted from a location management function, LMF, and/or a base station;
or,
determining at least one of a parameter type of the power parameter, the multipath parameter threshold or the length of the multipath time interval based on historical information, or based on historical information and channel change information.

36. The information transmission apparatus of claim 35, wherein the information transmission apparatus further comprises a first channel change transmitting unit, used for:

generating the channel change information; and transmitting the channel change information to the LMF and/or the base station, wherein the channel change information is used to trigger the LMF and/or the base station to reconfigure at least one of the parameter type of the power parameter, the multipath parameter threshold or the length of the multipath time interval.

37. The information transmission apparatus of any one of claims 32 to 34, wherein in case that the measuring end is a base station, the information transmission apparatus further comprises a second configuring unit, used for:

receiving at least one of a parameter type of the power parameter, the multipath parameter threshold or the length of the multipath time interval transmitted from a location management function, LMF, and/or a terminal;
or,
determining at least one of a parameter type of the power parameter, the multipath parameter threshold or the length of the multipath time interval based on historical information, or based on historical information and channel change information.

38. The information transmission apparatus of claim 37, wherein the information transmission apparatus further comprises a second channel change transmitting unit, used for:

receiving the channel change information generated by the terminal, or generating the channel change information; and
transmitting the channel change information to the LMF, wherein the channel change information is used to trigger the LMF to reconfigure at least one of the parameter type of the power parameter, the multipath parameter threshold or the length of the multipath time interval.

39. The information transmission apparatus of any one of claims 31 to 34, wherein the parameter type of the power parameter is absolute power or relative power.

40. The information transmission apparatus of any one of claims 31 to 34, wherein in case that the measuring end is a terminal, the measurement information of the second path comprises at least one of a power parameter, arrival time, a time difference between transmission and reception, or a phase of the second path;
or,
in case that the measuring end is a base station, the measurement information of the second path comprises at least one of a power parameter, arrival time, a time difference between transmission and reception, an angle of arrival, or a phase of the second path.

41. An information transmission apparatus, comprising:

an information receiving unit, used for receiving measurement information of at least one second path transmitted from a measuring end, wherein the at least one second path is selected from multiple first paths by the measuring end based on a multipath parameter threshold and power parameters for the multiple first paths, and the multiple first paths are paths other than a first detected path obtained by detecting a reference signal by the measuring end; and

a positioning unit, used for positioning a terminal based on the measurement information of the at least one second path.

**42.** The information transmission apparatus of claim 41, wherein the information transmission apparatus further comprises:

a configuration determining unit, used for determining at least one of a parameter type of the power parameter, the multipath parameter threshold or a length of a multipath time interval based on historical information; and

a third configuring unit, used for transmitting at least one of the parameter type of the power parameter, the multipath parameter threshold or the length of the multipath time interval to the measuring end.

**43.** The information transmission apparatus of claim 42, wherein the configuration determining unit is further used for:

receiving channel change information transmitted from the terminal and/or a base station, and reconfiguring at least one of the parameter type of the power parameter, the multipath parameter threshold or the length of the multipath time interval based on the historical information and the channel change information.

**44.** The information transmission apparatus of any one of claims 41 to 43, wherein the parameter type of the power parameter is absolute power or relative power.

**45.** The information transmission apparatus of any one of claims 41 to 43, wherein in case that the measuring end is a terminal, the measurement information of the second path comprises at least one of a power parameter, arrival time, a time difference between transmission and reception, or a phase of the second path;

or,

in case that the measuring end is a base station, the measurement information of the second path comprises at least one of a power parameter, arrival time, a time difference between transmission and reception, an angle of arrival, or a phase of the second path.

**46.** A processor readable storage medium storing a computer program that, when executed by a processor, causes the processor to perform the method of any one of claims 1 to 15.

Determining power parameters for multiple first paths, where the multiple first paths are paths other than a first detected path obtained by detecting a reference signal by a measuring end — 110

Selecting at least one second path from the multiple first paths based on a multipath parameter threshold and the power parameters for the multiple first paths — 120

Transmitting measurement information of the at least one second path — 130

FIG. 1

FIG. 2

FIG. 3

Receiving measurement information of at least one second path
transmitted from a measuring end, where the at least one second
path is selected from multiple first paths by the measuring end
based on a multipath parameter threshold and power parameters
for the multiple first paths, and the multiple first paths are paths
other than a first detected path obtained by detecting a reference
signal by the measuring end

410

Positioning a terminal based on the measurement information of
the at least one second path

420

FIG. 4

510

Processor

520

Memory

Bus interface

500

Transceiver

FIG. 5

610

Processor

620

Memory

Bus interface

600

Transceiver

FIG. 6

710

720

730

| Power parameter determining unit | Path selecting unit | Information transmitting unit |

FIG. 7

810

820

| Information receiving unit | Positioning unit |

FIG. 8

## INTERNATIONAL SEARCH REPORT

International application No.

**PCT/CN2022/117755**

| A. | CLASSIFICATION OF SUBJECT MATTER |
|---|---|

H04W 24/08(2009.01)i

According to International Patent Classification (IPC) or to both national classification and IPC

| B. | FIELDS SEARCHED |
|---|---|

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; WOTXT: 路径, 多径, 功率, 首径, 门限, 时延, 时间, 区间, 定位管理功能单元, LMF, path, multipath, power, head, road, threshold, latency, time, interval, positioning management function

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111586736 A (HUAWEI TECHNOLOGIES CO., LTD.) 25 August 2020 (2020-08-25) description, paragraphs [0014]-[0147] | 1-46 |
| A | CN 111447543 A (HUAWEI TECHNOLOGIES CO., LTD.) 24 July 2020 (2020-07-24) entire document | 1-46 |
| A | CN 112333624 A (HUAWEI TECHNOLOGIES CO., LTD.) 05 February 2021 (2021-02-05) entire document | 1-46 |
| A | EP 3866429 A1 (DEUTSCHE TELEKOM AG) 18 August 2021 (2021-08-18) entire document | 1-46 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117755**

| Patent document cited in search report | | | Publication date (day/month/year) | Patent family member(s) | | | Publication date (day/month/year) |
|---|---|---|---|---|---|---|---|
| CN | 111586736 | A | 25 August 2020 | None | | | |
| CN | 111447543 | A | 24 July 2020 | KR | 20210088678 | A | 14 July 2021 |
| | | | | EP | 3869834 | A1 | 25 August 2021 |
| | | | | US | 2021297817 | A1 | 23 September 2021 |
| | | | | WO | 2020135266 | A1 | 02 July 2020 |
| CN | 112333624 | A | 05 February 2021 | None | | | |
| EP | 3866429 | A1 | 18 August 2021 | None | | | |

Form PCT/ISA/210 (patent family annex) (January 2015)

**EP 4 412 290 A1**

**REFERENCES CITED IN THE DESCRIPTION**

**Patent documents cited in the description**

- CN 202111165523

- CN 202210135645